# EUROPEAN PATENT SPECIFICATION

(11) **EP 3 741 188 B1**
(45) Date of publication and mention of the grant of the patent: **29.05.2024**
(21) Application number: 19700303.1
(22) Date of filing: 14.01.2019
(51) Int. Cl.: H05B 45/3578, H05B 45/3725

(54) **FILAMENT EMULATION CIRCUIT FOR A LIGHT EMITTING DIODE TUBE LAMP**
GLÜHFADENEMULATIONSSCHALTUNG FÜR EINE LEUCHTDIODENRÖHRENLAMPE
CIRCUIT D'ÉMULATION DE FILAMENT POUR UNE LAMPE À TUBE À DIODES ÉLECTROLUMINESCENTES

(30) Priority: 18.01.2018 EP 18152370
(43) Date of publication of application: 25.11.2020
(73) Proprietor: Signify Holding B.V., 5656 AE Eindhoven (NL)
(72) Inventor: WENDT, Matthias, 5656 AE Eindhoven (NL); RADERMACHER, Harald, Josef, Günther, 5656 AE Eindhoven (NL); ACKERMANN, Bernd, 5656 AE Eindhoven (NL)
(74) Representative: Verweij, Petronella Daniëlle
(86) International application number: PCT/EP2019/050755
(87) International publication number: WO 2019/141613

(56) References cited:
- EP-A1- 3 012 512
- WO-A1-2013/150417
- WO-A1-2015/028639
- WO-A1-2017/194468
- US-A1- 2013 328 402

## Description

### FIELD OF THE INVENTION

The invention relates to a filament emulation circuit, a retrofittable tubular light emitting diode lamp to be coupled to a fluorescent electronic ballast. The invention further relates to a luminaire comprising the retrofittable tubular light emitting diode lamp and the fluorescent electronic ballast.

### BACKGROUND OF THE INVENTION

Light-emitting diodes (LEDs) are used as a kind of solid-state light source. Compared with conventional lighting, such as incandescent or fluorescent lamps, its advantages are compactness, high efficacy, good color, various and variable color, etc. LEDs are widely used in indoor lighting, decoration lighting and outdoor lighting. Some of these applications require the output light of the LEDs to be adjusted from 0.1% to 100% of the maximum light output.

In retrofit applications, a light emitting diode tube lamp, LED tube lamp, is also referred to as a retrofittable tubular LED lamp. The LED tube lamp can be connected to a fluorescent electronic ballast. Connecting an LED tube lamp to a fluorescent electronic ballast brings many challenges relating to compatibility and proper functionality of the LED tube lamp. Since the fluorescent electronic ballast is designed to operate with higher power rated fluorescent tubes, which comprises filaments, the electronic ballast is not operating in its optimized regime when operating low power consuming LED loads. Therefore, a lot of power will be lost in the electronic ballast resulting in a reduced efficiency. In known prior art, filament emulation circuits are provided with switches for several reasons, such as improved compatibility with the electronic ballast. One important reason is that the switches serve as a pin safety measure to prevent an installer of the LED tube lamp for getting an electric shock. These switches need to be powered in order to operate. WO 2017/194468 A1 discloses a prior art example.

### SUMMARY OF THE INVENTION

It is an objective of the invention to provide a filament emulation circuit, an LED tube lamp and a corresponding system comprising the LED tube lamp and a fluorescent electronic ballast, which has an improved power supply for the switches provided in the filament emulation circuit.

A filament emulation circuit is commonly used in LED tube lamps to provide an emulation for a fluorescent tube filament. A filament current will flow through connection pins in one end of the LED tube lamp just as it would if a real fluorescent lamp filament would be placed. This will allow the ballast to detect a filament impedance so that the ballast will not go into a protection mode. The filament emulation circuit is preferably placed at the end caps of the LED tube lamp but can be placed at any location.

In a first aspect of the invention, a filament emulation circuit located on one end of a retrofittable tubular light emitting diode lamp for operating with a fluorescent lamp ballast is provided comprising:
- a first power connection and a second power connection for receiving an output power of the fluorescent lamp ballast, wherein the first power connection and the second power connection are coupled to a single Bi-Pin connector,
- a first switching element arranged to prevent a current to flow between the first power connection and the second power connection when the first switching element is set in a non-conductive state,
- a first energy storage device coupled between the first power connection and the second power connection,
- a first controller for controlling the switching element, wherein the first controller is arranged for receiving power from the first energy storage device.

The filament emulation circuit is equipped with an energy storage device such as a battery that is arranged to provide the circuitry in the filament emulation circuit with energy. Especially the controller and the switching element in the filament emulation circuit are required to be operated at all times because they determine when the retrofittable tubular light emitting diode lamp can receive power from a ballast. Placing the energy storage device inside the filament emulation circuit further requires only a short and a low voltage connection from the energy storage device towards the switching elements, which saves a lot of space in the retrofittable tubular light emitting diode lamp.

In one embodiment, the filament emulation circuit further comprises a first conversion circuit arranged to provide power to the first energy storage device, wherein the first energy storage device is coupled between the first power connection and the second power connection via the first conversion circuit.

This provides a more efficient and controllable voltage to be supplied to the energy storage device.

In another embodiment, the conversion circuit further comprises a first switched mode power converter.

A switched mode power converter can provide a controllable voltage to the energy storage device.

In another embodiment, the switched mode power converter is arranged to generate a voltage drop over the first filament emulation circuit such that the voltage drop corresponds to a voltage drop created by a fluorescent lamp filament.

This embodiment allows a ballast to recognize a real `fluorescent tube' at its output and to tune its output power accordingly.

In another embodiment, the first switching element is a normally open switching element and wherein the first energy storage device is arranged to provide power to the first switching element when the retrofit light emitting lamp is operating.

This can significantly reduce the power consumption of the filament emulation circuit when the retrofittable tubular light emitting diode lamp is in stand-by. The retrofittable tubular light emitting diode lamp cannot receive any power from the ballast, making it important for the filament emulation circuit to consume as little as possible power during stand-by.

In another embodiment, the first switching element is a relay.

A relay can be used for further functionality such as pin safety because a relay can provide a minimum mechanical creepage and clearance distance.

In another embodiment, the first energy storage device is a low voltage energy storage device.

This allows for low voltage components to be used in the filament emulation circuit, which can further reduce the required space.

In another embodiment, the first energy storage device is a battery.

A battery, or rechargeable battery, is suited for energy storage and can provide a stable output voltage over a long discharge time.

In a further embodiment, a retrofittable tubular light emitting diode lamp may be arranged to be coupled to a fluorescent electronic ballast, and comprises:
- an LED load,
- a power converter for providing a controlled output signal to the LED load,
- the filament emulation circuit according to any of the preceding embodiments of the filament emulation circuit, wherein the first filament circuit is coupled between an output of the fluorescent electronic ballast and the power converter.

In another embodiment, the retrofittable tubular light emitting diode lamp further comprises:
- an LED load,
- a power converter for providing a controlled output signal to the LED load,
- the filament emulation circuit according to any of the preceding embodiments of the filament emulation circuit, wherein the first filament circuit is coupled between an output of the fluorescent electronic ballast and the power converter,
- a second filament emulation circuit on an opposite end of the light emitting diode tube lamp comprising:
- a third power connection and a fourth power connection for receiving an output power of the fluorescent lamp ballast,
- a second switching element arranged to prevent a current to flow between the third power connection and the fourth power connection when the second switching element is set in a non-conductive state,
- a second energy storage device coupled between the third power connection and the fourth power connection,
- a second controller for controlling the switching element, wherein the second controller is arranged for receiving power from the second energy storage device,
wherein the second filament circuit is coupled between another output of the fluorescent electronic ballast and the power converter.

A retrofittable tubular light emitting diode lamp that is provided with a filament emulation circuit on each end of the tube, wherein each filament emulation circuit has its own energy storage device, therefore no wiring from one end to another end is required, saving space in the retrofittable tubular light emitting diode lamp.

In another embodiment, the second filament emulation circuit further comprises a second conversion circuit arranged to provide power to the second energy storage device, wherein the second energy storage device is coupled between the third power connection and the fourth power connection via the second conversion circuit.

The second conversion circuit can comprise a second switched mode power converter. A switched mode power converter can provide a controllable voltage to the second energy storage device.

In another embodiment, the first power connection, the second power connection, the first energy storage device, the third power connection, the second storage device and the fourth power connection form a series connection for charging the first energy storage device and the second energy storage device.

This allows the first and second energy storage device to be charged via the current that is used to power the LEDs. This can be useful in case no filament voltage is present and another power source is required for charging the energy storage elements.

In another embodiment, the second switching element is a relay.

In another embodiment, the retrofittable tubular light emitting diode lamp is wirelessly controlled.

This allows the retrofittable tubular light emitting diode lamp to be controlled independently of the ballast. The retrofittable tubular light emitting diode lamp can therefore be equipped with additional functionality such as providing different light output settings such as dimming or changing of colors.

In another embodiment, a luminaire comprises:
- a retrofittable tubular light emitting diode lamp according to any of the preceding claims, and
- a fluorescent electronic ballast.

### BRIEF DESCRIPTION OF THE DRAWINGS

Examples of the invention will now be described in detail with reference to the accompanying drawings, in which;
Fig. 1 shows a known retrofittable tubular LED lamp wherein switches are integrated in the filament emulation circuit.
Fig. 2 shows a first detailed example of the retrofittable tubular LED lamp according to the present invention.
Fig. 3 shows a second detailed example of the retrofittable tubular LED lamp according to the present invention.
Fig. 4 shows a third detailed example of the retrofittable tubular LED lamp according to an example not part of the invention.

### DETAILED DESCRIPTION OF THE EMBODIMENTS

Retrofittable tubular LED lamps, TLEDs, can be equipped with many features for improving the power efficiency with the fluorescent lamp ballast the TLED is coupled to. Examples of fluorescent lamp ballasts are electromagnetic, e.g. EM ballasts, and electronic ballasts, e.g. HF ballasts. HF ballasts can be any of a self-oscillating ballast or an integrated circuit, IC, controlled ballast. Examples of additional features that can be introduced are matching circuits that can be introduced to match the input impedance of a TLED to that of a conventional fluorescent tube. During stand-by of the retrofittable tubular LED lamp however, a fluorescent lamp ballast still dissipates a significant amount of power to keep the oscillation of the output stage going. A solution to prevent the ballast from dissipating that amount of power during stand-by of the retrofittable tubular LED lamp, the retrofittable tubular LED lamp comprises switches that are placed in the retrofittable tubular LED lamp such that current is prevented to flow to the retrofittable tubular LED lamp, allowing the ballast to stop the oscillation at its output.

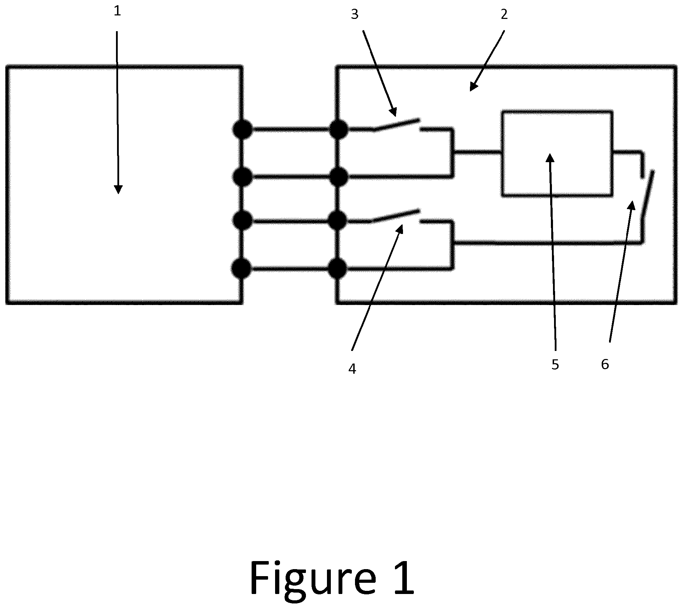

Figure 1 shows a schematic interpretation of a known retrofittable LED lamp 2. The retrofittable lamp 2 is coupled to a ballast 1 that provides power to the retrofittable LED lamp. The retrofittable LED lamp 2 comprises filament emulation circuits at both inputs. The filament emulation circuits may consist of resistive and/or reactive components such as resistors, filter capacitors and filter inductors. The filament emulation circuits can further comprise a first switch 3 and second switch 4, which can be used to disconnect the retrofittable LED lamp 2 from the ballast 1. Switch 6 is normally used for providing a pin safety solution when one end of the retrofittable LED lamp 2 is connected to one end of the ballast 1 and the other end is still touchable by an installer. Switch 6 can also be used to prevent current to be supplied from the ballast to the retrofittable LED lamp 2. The retrofittable LED lamp 2 may comprise a battery in the driver circuit 5. When the retrofittable LED lamp 2 is disconnected from the ballast 1, the battery can take over the power supply to the LED lighting load. A driver circuit 5 can be arranged to provide power to the LED lighting load provided by the battery or the ballast 1. In the first situation, the battery provides power to the LED load and the switches 3 and 4. When the battery is near depletion, the switches 3 and 4 can be turned on allowing the ballast 1 to provide power to the retrofittable LED lamp 2. Providing power to the LED load and the battery allows the retrofittable LED lamp 2 to draw more power from the ballast 1 allowing the ballast 1 to operate in a more efficient operating range. The switches in the filament emulation circuits require control and powering. The controller can be placed close to the switches. The battery however is placed on one side of the retrofittable LED lamp 2. Therefore, to provide power to the switches in both filament emulation circuits, wires have to be drawn from the battery to the filament emulation circuits wherein the switches are. These wires require a significant amount of space because a high insulation is required between the wires and the surrounding components. the invention proposes a solution for the wires with high insulation by providing energy storage devices in the filament emulation circuit.

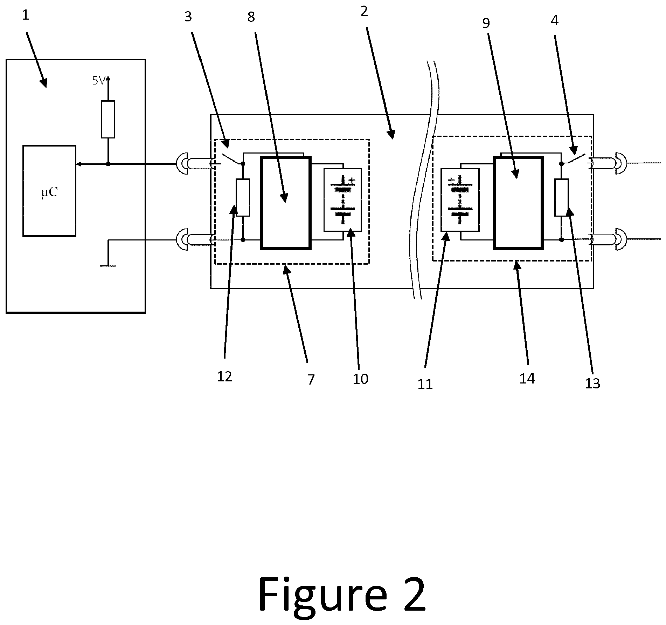

Figure 2 shows an exemplary embodiment of a retrofittable tubular light emitting diode lamp 2 according to the invention. The retrofittable tubular light emitting diode lamp 2 comprises a first filament emulation circuit 7, which is coupled to a ballast 1 via a Bi-Pin connector on one end of the light emitting diode tube lamp 2. The filament emulation circuit 7 may comprise a conversion circuit 8, which converts a signal generated by the filament emulation circuit 7 into a signal for charging an energy storage device 10. The energy storage device 10 is coupled to the conversion circuit 8 and is coupled to the control input of the switching element 3. A controller can be used to control the switching element 3. Both the switching element 3 and the controller are supplied by power from the energy storage device 10. The energy storage device 10 preferably has a large energy capacity. The energy storage device 10 can therefore be placed close to the switching element 3 and the controller. An example for placement of the filament emulation circuit 7 is in one end of the retrofittable tubular light emitting diode lamp 2. In this situation, the switching element 3 and controller are powered by a local low voltage and therefore no high voltage insulated wires are required, saving space in the retrofittable tubular light emitting diode lamp 2, which is especially relevant in tubular lighting lamps because the volume to be used for wiring is limited.

The ballast 1 provides a power to the retrofittable tubular light emitting diode lamp 2. This power is received by the filament emulation circuit 7 via a Bi-Pin connector. The filament emulation circuit 7 can be implemented to emulate a fluorescent lamp filament such that the ballast 1 senses that a fluorescent lamp filament is present. A filament current is provided by the ballast 1 through the filament emulation circuit 7. A voltage will drop over the filament emulation circuit 7. This voltage is used by the conversion circuit 8 for charging an energy storage device 10. The filament emulation circuit 7 further comprises a switching element 3. This switching element 3 is closed when the ballast 1 provides power to the retrofittable tubular light emitting diode lamp 2. Opening the switching element 3 prevents power to flow from the ballast 1 to the retrofittable tubular light emitting diode lamp 2. For opening and closing the switching element 3, the control gate of the switching element 3 needs to be powered. This power can be delivered by the energy storage device 10.

The voltage drop over the filament emulation circuit 7 can be generated by the conversion circuit 8. In this situation, the conversion circuit 8 controls both its input voltage as well as its output voltage. The energy that is normally dissipated in a resistive filament emulation circuit can now be stored in the energy storage device 10, resulting in a more energy efficient filament emulation circuit 7. Since the voltage drop over the filament emulation circuit 7 and the voltage required for controlling the switching element 3 can be relatively low, in the order of several to tens of Volts, the conversion circuit 8 can be relatively small and efficient.

In a further embodiment, the filament emulation circuit 7 may further comprise an additional filament element 12 coupled in parallel with the conversion circuit 8. The additional filament element 12 can be any of resistive and reactive components such as resistors, capacitors and inductors. In case the energy storage device 10 is charged and the conversion circuit 8 is not capable of drawing the filament current, an additional parallel filament emulation element 12 can still draw a filament current such that the ballast 1 can provide a filament current in order to operate adequately.

The retrofittable tubular light emitting diode lamp 2 may further comprise a further filament emulation circuit 14, which is coupled to the ballast 1 via a further Bi-Pin connector. The further filament emulation circuit 14 may comprise a further switching element 4. The further filament emulation circuit 14 may comprise a further conversion circuit 9, which converts a signal generated by the filament emulation circuit 14 into a signal for charging a further energy storage device 11.

The further energy storage device 11 is coupled to the further conversion circuit 9 and is coupled to the control input of the switching element 4. A controller can be used to control the switching element 4. Both the switching element 4 and the controller are supplied by power from the energy storage device 11. The energy storage device 11 can therefore be placed close to the switching element 4 and the controller. An example for placement of the filament emulation circuit 14 is in the other end of the retrofittable tubular light emitting diode lamp 2. In this situation, the switching element 4 and controller are powered by a local low voltage and therefore no high voltage insulated wires are required, saving space in the retrofittable tubular light emitting diode lamp 2.

Both filament emulation circuits 7, 14 are now capable of providing their own power supply for the switching elements 3, 4 when the ballast 1 does not provide any power to the retrofittable tubular light emitting diode lamp 2. Power lines from one end of the tubular lamp to the other end of the lamp can therefore be omitted. This is especially relevant for tubular LED lamps since the available space in the lamps is limited.

In a further example, the filament emulation circuit 7 can be arranged to provide a defined filament voltage at the Bi-Pin connectors. In this example, the switching element 3 can be part of the conversion circuit 8. The switching element 3 can be switched in such fashion that it can control the power transferred to the energy storage device 10 and the voltage that is present at the input of the conversion circuit 8. In this case, the voltage input at the input of the conversion circuit 8 is the voltage at the Bi-Pin connector. When the ballast 1 monitors the voltage present over the Bi-Pin connector, the voltage needs to stay within a limited range in order to prevent the ballast 1 to go into an error mode. In this example, 5 V is supplied by the ballast 1 to the Bi-Pin connector. If the voltage at the Bi-Pin connector drops below a threshold, in this case for example 3V, the ballast 1 switches off. In other words, the filament emulation circuit 7 can change the voltage drop over the filament emulation circuit 7. The filament emulation circuit 7 thereby causes the ballast 1 to switch off when the voltage drop is below 3V. The filament emulation circuit 7 therefore serves two purposes, namely to turn off the ballast 1 when no light output is required and to provide power to the energy storage device 10 for powering the switching element 3.

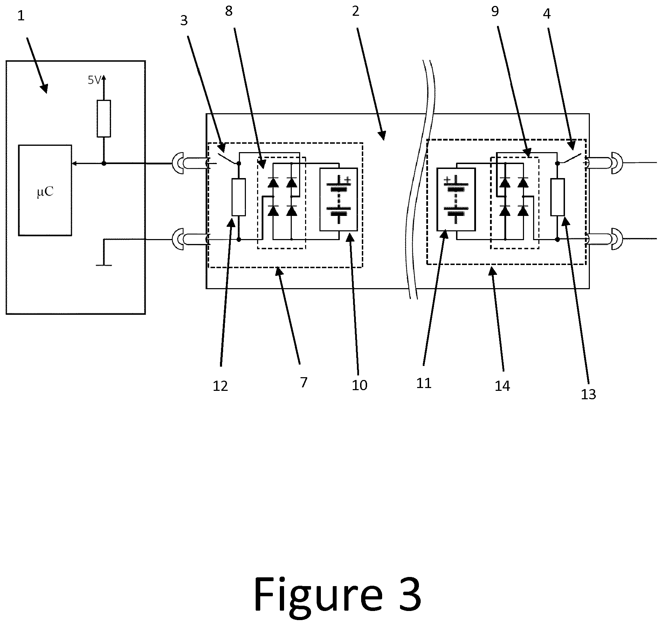

Figure 3 shows an exemplary embodiment of a retrofittable tubular light emitting diode lamp 2 according to the invention. The retrofittable tubular light emitting diode lamp 2 comprises a filament emulation circuit 7, which is coupled to a ballast 1 via a Bi-Pin connector. The filament emulation circuit 7 comprises a conversion circuit 8, which converts a signal generated by the filament emulation circuit 7 into a signal for charging an energy storage device 10. The energy storage device 10 is coupled to the conversion circuit 8 and is coupled to the control input of the switching element 3. The energy storage device 10 can be placed close to the filament emulation circuit 7 and the switching element 3. In this example, the conversion circuit 8 is a rectifier bridge coupled between the first Bi-Pin connections. The filament current will flow through the rectifier bridge and provides power to the energy storage device 10. The filament emulation circuit 7 can further have an additional filament element 12 coupled in parallel with the rectifier bridge. The rectifier bridge rectifies the voltage that drops over the additional filament element 12 and feeds this voltage to the energy storage element. The stored energy can be used to control and/or power the switching element 3. If the energy storage device 10 is full of charge, the additional filament element 12 can still provide a conductive path for the filament current while providing a desired voltage drop for keeping the voltage present over the Bi-Pin connections to stay within a limited range. It should be noted that this is not an essential requirement since not all ballasts apply such aforementioned voltage monitoring.

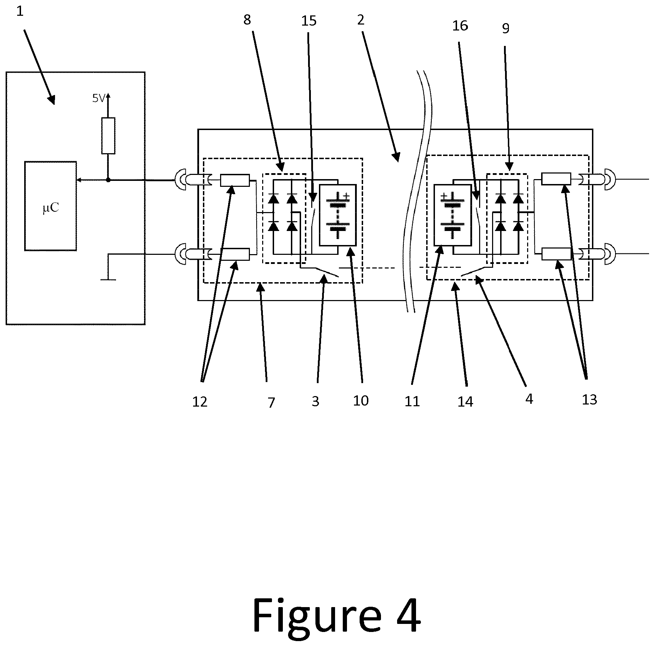

Figure 4 shows an example not part of the invention of a retrofittable tubular light emitting diode lamp 2. The retrofittable tubular light emitting diode lamp 2 comprises a first filament emulation circuit 7, which is coupled to a ballast 1 via a first Bi-Pin connection. The filament emulation circuit 7 comprises a conversion circuit 8, which converts a signal generated by the filament emulation circuit 7 into a signal for charging an energy storage device 10. The energy storage device 10 is coupled to the conversion circuit 8 and is coupled to the control input of the switching element 3. The energy storage device 10 can be placed close to the filament emulation circuit 7 and the switching element 3. The retrofittable tubular light emitting diode lamp 2 further comprises a further filament emulation circuit 14, which is coupled to the ballast 1 via a further Bi-Pin connection. The filament emulation circuit 14 comprises a further conversion circuit 9, which converts a signal generated by the filament emulation circuit 14 into a signal for charging an energy storage device 11. The energy storage device 11 is coupled to the conversion circuit 9 and is coupled to the control input of the switching element 4. The energy storage device 11 can be placed close to the filament emulation circuit 14 and the switching element 4.

In this example, the conversion circuits 8, 9 are represented as rectifier bridges coupled between the first and further Bi-Pin connections. The energy storage devices 10, 11 are charged by a current flowing through one of the first Bi-pin connections, a first diode of the first conversion circuit 8, the first energy storage device 10, a second diode of the first conversion circuit 8, a first diode of the further conversion circuit 9, the further energy storage device 11, a second diode of the further conversion circuit 9 and one of the further Bi-pin connections. It should be noted that in this embodiment a Bi-pin connection is shown. However, single-pin connectors can also be used. In this situation, the tombstone, being a standard connection component between a fluorescent tube and a fluorescent lamp ballast, used for supporting the retrofittable tubular light emitting diode lamp 2 has a one pin connection.

The filament emulation circuits 7 and 14 may further comprise additional switches 15 and 16. The additional switches 15 and 16 are placed in parallel to the outputs of the conversion circuits 8 and 9. These switches can be closed in case the energy storage devices 10 and 11 are fully charged respectively. Therefore, power can still flow from one of the first Bi-pin connections to one of the further Bi-pin connections. This allows power to be supplied to the LED load or to one of the energy storage devices 10 and 11 if additional charging would be required.

The switching elements 3, 4 can be normally open switches or normally closed switches. A switching element can be any of, but not limited to, a relay, solid state relays or solid-state devices such as MOSFETs, transistors or thyristor.

Examples of power conversion circuits can be any of, but not limited to, a rectifier bridge, a linear power supply and a switched mode power supply.

Examples of energy storage devices can be any of, but not limited to, a battery and a super capacitor.

Examples of retrofittable tubular light emitting diode lamps wherein the claimed filament emulation circuit can be implemented are double-capped LED lamps having two G13 or G5 lampcaps, and single-capped LED lamps having a 2G11 or G24q lampcap.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

## Claims

1. A filament emulation circuit (7) for emulating a fluorescent lamp filament such that a fluorescent lamp ballast (1) senses that a fluorescent lamp filament is present and for a retrofittable tubular light emitting diode lamp (2) for operating with a fluorescent lamp ballast (1), the filament emulation circuit comprising:
- a first power connection and a second power connection for receiving an output power of the fluorescent lamp ballast (1), wherein the first power connection and the second power connection are coupled to a single Bi-Pin connector,
- a first switching element (3) arranged to prevent a current to flow between the first power connection and the second power connection when the first switching element (3) is set in a non-conductive state, **characterised in that**
- a first energy storage device (10) coupled between the first power connection and the second power connection,
- a first controller for controlling the first switching element (3), wherein the first controller is arranged for receiving power from the first energy storage device (10).

2. The filament emulation circuit (7) according to claim 1, further comprising a first conversion circuit (8) arranged to provide power to the first energy storage device (10), wherein the first energy storage device (10) is coupled between the first power connection and the second power connection via the first conversion circuit (8).

3. The filament emulation circuit (7) according to claim 2 wherein the first conversion circuit (8) comprises a first switched mode power converter.

4. The filament emulation circuit (7) according to claim 3 wherein the first switched mode power converter is arranged to generate a voltage drop over the first filament emulation circuit (7) such that the voltage drop corresponds to a voltage drop created by a fluorescent lamp filament.

5. The filament emulation circuit (7) according to claim 4 wherein the first switching element (3) is a normally open switching element and wherein the first energy storage device (10) is arranged to provide power to the first switching element (3) when the retrofittable tubular light emitting diode lamp (2) is operating.

6. The filament emulation circuit (7) according to any of the preceding claims, wherein the first switching element (3) is a relay.

7. The filament emulation circuit (7) according to any of the preceding claims wherein the first energy storage device (10) is a low voltage energy storage device.

8. The filament emulation circuit (7) according to any of the preceding claims wherein the first energy storage device (10) is a battery.

9. A retrofittable tubular light emitting diode lamp (2) arranged to be coupled to a fluorescent electronic ballast (1), the retrofittable tubular light emitting diode lamp (2) comprising:
- an LED load,
- a power converter for providing a controlled output signal to the LED load,
- the filament emulation circuit (7) according to any of the preceding claims, wherein the first filament circuit (7) is coupled between an output of the fluorescent electronic ballast (1) and the power converter.

10. The retrofittable tubular light emitting diode lamp (2) according to claim 9,
wherein the first filament circuit (7) is located at on one end of the retrofittable tubular light emitting diode lamp (2), and the retrofittable tubular light emitting diode lamp further comprises
- a second filament emulation circuit (14) on an opposite end of the retrofittable tubular light emitting diode lamp, the second filament emulation circuit (2) comprising:
- a third power connection and a fourth power connection for receiving an output power of the fluorescent lamp ballast (1),
- a second switching element (4) arranged to prevent a current to flow between the third power connection and the fourth power connection when the second switching element (4) is set in a non-conductive state,
- a second energy storage device (11) coupled between the third power connection and the fourth power connection,
- a second controller for controlling the switching element (3), wherein the second controller is arranged for receiving power from the second energy storage device (11), wherein the second filament circuit (14) is coupled between another output of the fluorescent electronic ballast (1) and the power converter.

11. The retrofittable tubular light emitting diode lamp (2) according to claim 10, wherein the second filament emulation circuit (14) further comprises a second conversion circuit (9) arranged to provide power to the second energy storage device (11), wherein the second energy storage device (11) is coupled between the third power connection and the fourth power connection via the second conversion circuit (9).

12. The retrofittable tubular light emitting diode lamp (2) according to any of the claims 10 or 11 wherein the first power connection, the second power connection, the first energy storage device (10), the third power connection, the second storage device (11) and the fourth power connection form a series connection for charging the first energy storage device (10) and the second energy storage device (11).

13. The retrofittable tubular light emitting diode lamp (2) according to any of the claims 10-12 wherein the second switching element (4) is a relay.

14. The retrofittable tubular light emitting diode lamp (2) according to any of the preceding claims wherein the retrofittable tubular light emitting diode lamp (2) is wirelessly controlled.

15. A luminaire comprising:
- a retrofittable tubular light emitting diode lamp (2) according to any of the preceding claims, and
- a fluorescent electronic ballast.

## Patentansprüche

1. Glühfadenemulationsschaltung (7) zum derartigen Emulieren eines Leuchtstofflampenglühfadens, dass ein Vorschaltgerät (1) für Leuchtstofflampen erfasst, dass ein Leuchtstofflampenglühfaden vorhanden ist, und für eine nachrüstbare röhrenförmige Leuchtdiodenlampe (2) zum Betreiben mit einem Vorschaltgerät (1) für Leuchtstofflampen, die Glühfadenemulationsschaltung umfassend:
- einen ersten Leistungsanschluss und einen zweiten Leistungsanschluss zum Aufnehmen einer Ausgangsleistung des Vorschaltgeräts (1) für Leuchtstofflampen, wobei der erste Leistungsanschluss und der zweite Leistungsanschluss mit einem einzigen Zweistiftanschlussstecker gekoppelt sind,
- ein erstes Schaltelement (3), das angeordnet ist, um zu verhindern, dass ein Strom zwischen dem ersten Leistungsanschluss und dem zweiten Leistungsanschluss fließt, wenn das erste Schaltelement (3) in einen nicht leitfähigen Zustand versetzt wird, **dadurch gekennzeichnet, dass**
- eine erste Energiespeichervorrichtung (10) zwischen den ersten Leistungsanschluss und den zweiten Leistungsanschluss gekoppelt ist,
- eine erste Steuerung zum Steuern des ersten Schaltelements (3), wobei die erste Steuerung zum Aufnehmen von Leistung von der ersten Energiespeichervorrichtung (10) angeordnet ist.

2. Glühfadenemulationsschaltung (7) nach Anspruch 1, ferner umfassend eine erste Umwandlungsschaltung (8), die angeordnet ist, um die erste Energiespeichervorrichtung (10) mit Leistung zu versorgen, wobei die erste Energiespeichervorrichtung (10) mittels der ersten Umwandlungsschaltung (8) zwischen den ersten Leistungsanschluss und den zweiten Leistungsanschluss gekoppelt ist.

3. Glühfadenemulationsschaltung (7) nach Anspruch 2, wobei die erste Umwandlungsschaltung (8) einen ersten Schaltmodusleistungswandler umfasst.

4. Glühfadenemulationsschaltung (7) nach Anspruch 3, wobei der erste Schaltmodusleistungswandler angeordnet ist, um einen Spannungsabfall über der ersten Glühfadenemulationsschaltung (7) derart zu generieren, dass der Spannungsabfall einem Spannungsabfall, der durch einen Leuchtstofflampenglühfaden erzeugt wird, entspricht.

5. Glühfadenemulationsschaltung (7) nach Anspruch 4, wobei das erste Schaltelement (3) ein normalerweise offenes Schaltelement ist und wobei die erste Energiespeichervorrichtung (10) angeordnet ist, um das erste Schaltelement (3) mit Leistung zu versorgen, wenn die nachrüstbare röhrenförmige Leuchtdiodenlampe (2) in Betrieb ist.

6. Glühfadenemulationsschaltung (7) nach einem der vorstehenden Ansprüche, wobei das erste Schaltelement (3) ein Relais ist.

7. Glühfadenemulationsschaltung (7) nach einem der vorstehenden Ansprüche, wobei die erste Energiespeichervorrichtung (10) eine Niederspannungsenergiespeichervorrichtung ist.

8. Glühfadenemulationsschaltung (7) nach einem der vorstehenden Ansprüche, wobei die erste Energiespeichervorrichtung (10) eine Batterie ist.

9. Nachrüstbare röhrenförmige Leuchtdiodenlampe (2), die angeordnet ist, um mit einem elektronischen Vorschaltgerät (1) für Leuchtstoffleuchten gekoppelt zu werden, die nachrüstbare röhrenförmige Leuchtdiodenlampe (2) umfassend:
- eine LED-Last,
- einen Leistungswandler zum Versorgen der LED-Last mit einem gesteuerten Ausgangssignal,
- die Glühfadenemulationsschaltung (7) nach einem der vorstehenden Ansprüche, wobei die erste Glühfadenschaltung (7) zwischen einen Ausgang des elektronischen Vorschaltgeräts (1) für Leuchtstoffleuchten und den Leistungswandler gekoppelt ist.

10. Nachrüstbare röhrenförmige Leuchtdiodenlampe (2) nach Anspruch 9, wobei die erste Glühfadenschaltung (7) an einem Ende der nachrüstbaren röhrenförmigen Leuchtdiodenlampe (2) gelegen ist und die nachrüstbare röhrenförmige Leuchtdiodenlampe ferner umfasst
- eine zweite Glühfadenemulationsschaltung (14) an einem gegenüberliegenden Ende der nachrüstbaren röhrenförmigen Leuchtdiodenlampe, die zweite Glühfadenemulationsschaltung (2) umfassend:
- einen dritten Leistungsanschluss und einen vierten Leistungsanschluss zum Aufnehmen einer Ausgangsleistung des Vorschaltgeräts (1) für Leuchtstofflampen,
- ein zweites Schaltelement (4), das angeordnet ist, um zu verhindern, dass ein Strom zwischen dem dritten Leistungsanschluss und dem vierten Leistungsanschluss fließt, wenn das zweite Schaltelement (4) in einen nicht leitfähigen Zustand versetzt wird,
- eine zweite Energiespeichervorrichtung (11), die zwischen den dritten Leistungsanschluss und den vierten Leistungsanschluss gekoppelt ist,
- eine zweite Steuerung zum Steuern des Schaltelements (3), wobei die zweite Steuerung zum Aufnehmen von Leitung von der zweiten Energiespeichervorrichtung (11) angeordnet ist, wobei die zweite Glühfadenschaltung (14) zwischen einen anderen Ausgang des elektronischen Vorschaltgeräts (1) für Leuchtstoffleuchten und den Leistungswandler gekoppelt ist.

11. Nachrüstbare röhrenförmige Leuchtdiodenlampe (2) nach Anspruch 10, wobei die zweite Glühfadenemulationsschaltung (14) ferner eine zweite Umwandlungsschaltung (9) umfasst, die angeordnet ist, um die zweite Energiespeichervorrichtung (11) mit Leistung zu versorgen, wobei die zweite Energiespeichervorrichtung (11) mittels der zweiten Umwandlungsschaltung (9) zwischen den dritten Leistungsanschluss und den vierten Leistungsanschluss gekoppelt ist.

12. Nachrüstbare röhrenförmige Leuchtdiodenlampe (2) nach einem der Ansprüche 10 oder 11, wobei der erste Leistungsanschluss, der zweite Leistungsanschluss, die erste Energiespeichervorrichtung (10), der dritte Leistungsanschluss, die zweite Energiespeichervorrichtung (11) und der vierte Leistungsanschluss einen Reihenanschluss zum Laden der ersten Energiespeichervorrichtung (10) und der zweiten Energiespeichervorrichtung (11) ausbilden.

13. Nachrüstbare röhrenförmige Leuchtdiodenlampe (2) nach einem der Ansprüche 10 bis 12, wobei das zweite Schaltelement (4) ein Relais ist.

14. Nachrüstbare röhrenförmige Leuchtdiodenlampe (2) nach einem der vorstehenden Ansprüche, wobei die nachrüstbare röhrenförmige Leuchtdiodenlampe (2) drahtlos gesteuert wird.

15. Leuchte, umfassend:
- eine nachrüstbare röhrenförmige Leuchtdiodenlampe (2) nach einem der vorstehenden Ansprüche und
- ein elektronisches Vorschaltgerät für Leuchtstoff leuchten.

## Revendications

1. Circuit d'émulation de filament (7) permettant d'émuler un filament de lampe fluorescent de telle sorte qu'un ballast de lampe fluorescent (1) détecte qu'un filament de lampe fluorescent est présent et pour une lampe à diode électroluminescente tubulaire pouvant être installée ultérieurement (2) permettant de fonctionner avec un ballast de lampe fluorescent (1), le circuit d'émulation de filament comprenant :
- une première connexion de puissance et une deuxième connexion de puissance permettant de recevoir une puissance de sortie du ballast de lampe fluorescent (1), dans lequel la première connexion de puissance et la deuxième connexion de puissance sont couplées à un unique connecteur à deux broches,
- un premier élément de commutation (3) agencé pour empêcher un courant de circuler entre la première connexion de puissance et la deuxième connexion de puissance lorsque le premier élément de commutation (3) est réglé dans un état non conducteur, **caractérisé en ce qu'**
- un premier dispositif de stockage d'énergie (10) couplé entre la première connexion de puissance et la deuxième connexion de puissance,
- un premier dispositif de commande permettant de commander le premier élément de commutation (3), dans lequel le premier dispositif de commande est agencé pour recevoir de la puissance provenant du premier dispositif de stockage d'énergie (10).

2. Circuit d'émulation de filament (7) selon la revendication 1, comprenant en outre un premier circuit de conversion (8) agencé pour fournir de la puissance au premier dispositif de stockage d'énergie (10), dans lequel le premier dispositif de stockage d'énergie (10) est couplé entre la première connexion de puissance et la deuxième connexion de puissance par l'intermédiaire du premier circuit de conversion (8).

3. Circuit d'émulation de filament (7) selon la revendication 2 dans lequel le premier circuit de conversion (8) comprend un premier convertisseur de puissance à mode commuté.

4. Circuit d'émulation de filament (7) selon la revendication 3 dans lequel le premier convertisseur de puissance à mode commuté est agencé pour générer une chute de tension sur le premier circuit d'émulation de filament (7) de telle sorte que la chute de tension correspond à une chute de tension créée par un filament de lampe fluorescent.

5. Circuit d'émulation de filament (7) selon la revendication 4 dans lequel le premier élément de commutation (3) est un élément de commutation normalement ouvert et dans lequel le premier dispositif de stockage d'énergie (10) est agencé pour fournir de la puissance au premier élément de commutation (3) lorsque la lampe à diode électroluminescente tubulaire pouvant être installée ultérieurement (2) fonctionne.

6. Circuit d'émulation de filament (7) selon l'une quelconque des revendications précédentes, dans lequel le premier élément de commutation (3) est un relais.

7. Circuit d'émulation de filament (7) selon l'une quelconque des revendications précédentes dans lequel le premier dispositif de stockage d'énergie (10) est un dispositif de stockage d'énergie basse tension.

8. Circuit d'émulation de filament (7) selon l'une quelconque des revendications précédentes dans lequel le premier dispositif de stockage d'énergie (10) est une batterie.

9. Lampe à diode électroluminescente tubulaire pouvant être installée ultérieurement (2) agencée pour être couplée à un ballast électronique fluorescent (1), la lampe à diode électroluminescente tubulaire pouvant être installée ultérieurement (2) comprenant :
- une charge de DEL,
- un convertisseur de puissance permettant de fournir un signal de sortie commandé à la charge de DEL,
- le circuit d'émulation de filament (7) selon l'une quelconque des revendications précédentes, dans laquelle le premier circuit de filament (7) est couplé entre une sortie du ballast électronique fluorescent (1) et le convertisseur de puissance.

10. Lampe à diode électroluminescente tubulaire pouvant être installée ultérieurement (2) selon la revendication 9, dans laquelle le premier circuit de filament (7) est situé au niveau d'une extrémité de la lampe à diode électroluminescente tubulaire pouvant être installée ultérieurement (2) et la lampe à diode électroluminescente tubulaire pouvant être installée ultérieurement comprend en outre
- un second circuit d'émulation de filament (14) sur une extrémité opposée de la lampe à diode électroluminescente tubulaire pouvant être installée ultérieurement, le second circuit d'émulation de filament (2) comprenant :
- une troisième connexion de puissance et une quatrième connexion de puissance permettant de recevoir une puissance de sortie du ballast de lampe fluorescent (1),
- un second élément de commutation (4) agencé pour empêcher un courant de circuler entre la troisième connexion de puissance et la quatrième connexion de puissance lorsque le second élément de commutation (4) est réglé dans un état non conducteur,
- un second dispositif de stockage d'énergie (11) couplé entre la troisième connexion de puissance et la quatrième connexion de puissance,
- un second dispositif de commande permettant de commander l'élément de commutation (3), dans laquelle le second dispositif de commande est agencé pour recevoir de la puissance provenant du second dispositif de stockage d'énergie (11), dans laquelle le second circuit de filament (14) est couplé entre une autre sortie du ballast électronique fluorescent (1) et le convertisseur de puissance.

11. Lampe à diode électroluminescente tubulaire pouvant être installée ultérieurement (2) selon la revendication 10, dans laquelle le second circuit d'émulation de filament (14) comprend en outre un second circuit de conversion (9) agencé pour fournir de la puissance au second dispositif de stockage d'énergie (11), dans laquelle le second dispositif de stockage d'énergie (11) est couplé entre la troisième connexion de puissance et la quatrième connexion de puissance par l'intermédiaire du second circuit de conversion (9).

12. Lampe à diode électroluminescente tubulaire pouvant être installée ultérieurement (2) selon l'une quelconque des revendications 10 ou 11 dans laquelle la première connexion de puissance, la deuxième connexion de puissance, le premier dispositif de stockage d'énergie (10), la troisième connexion de puissance, le second dispositif de stockage (11) et la quatrième connexion de puissance forment une connexion en série permettant de charger le premier dispositif de stockage d'énergie (10) et le second dispositif de stockage d'énergie (11).

13. Lampe à diode électroluminescente tubulaire pouvant être installée ultérieurement (2) selon l'une quelconque des revendications 10 à 12 dans laquelle le second élément de commutation (4) est un relais.

14. Lampe à diode électroluminescente tubulaire pouvant être installée ultérieurement (2) selon l'une quelconque des revendications précédentes dans laquelle la lampe à diode électroluminescente tubulaire pouvant être installée ultérieurement (2) est commandée sans fil.

15. Luminaire comprenant :
- une lampe à diode électroluminescente tubulaire pouvant être installée ultérieurement (2) selon l'une quelconque des revendications précédentes, et
- un ballast électronique fluorescent.
